# EUROPÄISCHE PATENTSCHRIFT

(11) **EP 4 108 967 B1**
(45) Veröffentlichungstag und Bekanntmachung des Hinweises auf die Patenterteilung: **01.05.2024**
(21) Anmeldenummer: 21181435.5
(22) Anmeldetag: 24.06.2021
(51) Int. Cl.: F16L 5/04, F16L 5/02, H02G 3/04, H02G 3/22, A62C 2/06, A62C 3/16, E04B 1/94

(54) **VORRICHTUNG ZUR ABDICHTUNG EINER LEITUNGSDURCHFÜHRUNG**
DEVICE FOR SEALING A CONDUIT PASSAGE
DISPOSITIF D'ÉTANCHÉIFICATION D'UN PASSAGE DE CONDUITE

(43) Veröffentlichungstag der Anmeldung: 28.12.2022
(73) Patentinhaber: Hilti Aktiengesellschaft, 9494 Schaan (LI)
(72) Erfinder: Förg, Christian, 86807 Buchloe (DE)
(74) Vertreter: Hilti Aktiengesellschaft Corporate Intellectual Property

(56) Entgegenhaltungen:
- US-A1- 2018 264 298
- US-B1- 8 739 482

## Beschreibung

Die Erfindung betrifft eine Vorrichtung zur Abdichtung einer Leitungsdurchführung, beispielsweise für Kabeln, die durch eine Wand oder Decke eines Gebäudes geführt werden sollen. Die Vorrichtung umfasst ein hülsenartiges Gehäuse mit vier flachen Seitenwänden, die einen axialen Durchlasskanal zum Durchführen von Leitungen begrenzen, auf dessen Abdichtung sich die Erfindung richtet. Es kann sich insbesondere um eine brandschutzgerechte Abdichtung, unter anderem gegen Rauchgase, handeln.

Im Stand der Technik sind verschiedenartige Konstruktionen zur Abschottung, d. h. brandschutzgerechten Versiegelung, von Kabeldurchführungen durch eine Wand oder Decke eines Gebäudes bekannt. Sie umfassen eine Durchführungshülse, die in einem Wand- oder Deckendurchbruch installierbar ist, um ihn zu verschließen und dabei einen Durchlasskanal zur Durchführung von Kabeln oder Rohren zu bilden. Der Durchlasskanal muss in ausreichendem Maße gegen Rauch, Gase und andere Medien, die sich insbesondere im Brandfall im Gebäude bilden können, abgedichtet werden. Dadurch soll eine Ausbreitung des Brands und schädlicher Brandprodukte wie Rauch und Gase aus einem betroffenen Raum in andere Räume durch die Leitungsdurchführung weitgehend verhindert werden.

Es sind grundsätzlich zwei Typen von derartigen Durchführungshülsen bekannt. Der eine Typ ist mit einem Abdichtungssystem ausgestattet, welches sich beim Durchstecken der Kabel dem Widerstand beugt. Konkrete Realisierungen und Handhabung gestalten sich jedoch als schwierig, da entweder die Kabel nicht einfach gegen den Widerstand durch das System zu führen sind und/oder nur schlechte Abdichtung und Kaltrauchdichtigkeit erreichbar sind.

Ein anderer Typ von Durchführungshülsen weist einen Schließmechanismus auf, der von Hand betätigt werden muss. Durch das Öffnen des Schließmechanismus wird der Durchlasskanal zur Kabeldurchführung geschaffen oder zugänglich gemacht, danach muss das System wieder manuell geschlossen werden, um den Kanal abzudichten. Ein grundsätzliches Problem bei den mechanisch zu schließenden Systemen besteht darin, dass es in der Praxis zu leicht vergessen werden kann, das System zu schließen. Ein Vorteil ist wiederum, dass diese Systeme im Vergleich zum ersteren Typ deutlich dichter sein können. Außerdem erfolgt die Kabelbelegung ohne Widerstand.

Die US 8 739 482 B1 offenbart eine Feuerschutzvorrichtung mit einer Hülse mit mindestens einem ersten und einem zweiten luftstromsperrenden Element, wobei jedes luftstromsperrende Element einen elastisch zusammendrückbaren Körper aus einem Elastomerschaum umfassen kann und im Allgemeinen entlang einer Längsachse der Hülse verschiebbar ist. Jedes Luftstromsperrelement kann mit mindestens einer Schubstange verbunden sein, wobei die Schubstangen mit einem Griff verbunden sein können, der von einem zweiten offenen Ende der Hülse nach außen ragt. Jeder elastisch zusammendrückbare Körper kann von einer Vorspannbahn getragen werden, die aus einem Material besteht, das mit einer inhärenten Vorspannung, d. h. einer inhärenten Tendenz zum Aufrollen, versehen werden kann.

Es ist Aufgabe der vorliegenden Erfindung, eine Vorrichtung zur Abdichtung einer Leitungsdurchführung bereitzustellen, mit der die beschriebenen Schwierigkeiten vermeidbar sind.

Diese Aufgabe wird durch eine Vorrichtung gemäß Anspruch 1 zur Abdichtung einer Leitungsdurchführung gelöst. Die Leitungsdurchführung kann insbesondere Kabeln, aber auch Rohre oder andersartige Leitungen, betreffen, die beispielsweise durch eine Öffnung in einer Wand oder Decke eines Gebäudes geführt werden sollen. Weitere Ausgestaltungen sind in den abhängigen Ansprüchen angegeben. Bei der Abdichtung kann es sich insbesondere um eine brandschutzgerechte Abdichtung, beispielsweise gegen Rauch, gegebenenfalls aber auch gegen Gase, Wasser und andere Medien, die sich im Brandfall im Gebäude bilden oder ins Gebäude dringen können, handeln. Dadurch kann eine Ausbreitung des Brands und schädlicher Brandprodukte aus einem betroffenen Raum in andere Räume durch die Leitungsdurchführung verhindert werden. Darüber hinaus kann durch die Leitungsdurchführung eine Abdichtung im Normalbetrieb ohne einen Brandfall beispielsweise zur Energieeinsparung bei gekühlten Räumen oder zur Abdichtung gegenüber Schall und/oder Gerüchen geschaffen werden.

Die Vorrichtung umfasst ein hülsenartiges Gehäuse, das aus vier paarweise gegenüberliegenden flachen Seitenwänden gebildet wird, die einen axialen Durchlasskanal zum Durchführen von Leitungen begrenzen. Das Gehäuse kann daher in einer zur axialen Richtung des Durchlasskanals senkrechten Richtung einen rechteckigen, insbesondere quadratischen, Querschnitt besitzen. Ebenso kann das Gehäuse einen kreisförmigen, sechseckigen oder ansonsten geeigneten Querschnitt aufweisen. Das Gleiche gilt auch für einen von den vier Seitenwänden begrenzten Öffnungsquerschnitt des Durchlasskanals.

Im Durchlasskanal ist ein elastisch komprimierbarer Schaumstoffkörper angeordnet. Die Querschnittsabmessungen des Schaumstoffkörpers in seinem nicht komprimierten Zustand überschreiten zumindest in einer, idealerweise in allen Richtungen quer zur axialen Richtung des Durchlasskanals die Abmessungen des Öffnungsquerschnitts des Durchlasskanals. Daher ist der Schaumstoffkörper im Durchlasskanal stets in einem zumindest durch die Seitenwände vorkomprimierten Zustand, verschließt dabei seinen Öffnungsquerschnitt vollständig und dichtet ihn zumindest gegen Rauch (und je nach Material, axialer Abmessung und Porengröße des Schaumstoffkörpers gegebenenfalls auch gegen Gase und/oder Flüssigkeiten) ab.

In axialer Richtung zu beiden Seiten des Schaumstoffkörpers sind im Durchlasskanal oder an seinen Stirnseiten zwei Spannvorrichtungen am Gehäuse befestigt. Die Spannvorrichtungen sind zum Spannen eines elastischen Zugbands ausgebildet, welches mit seinen entgegengesetzten Enden an je einer Spannvorrichtung befestigt ist und im Durchlasskanal zwischen dem Schaumstoffkörper und einer ersten Seitenwand verläuft.

Die zwei Spannvorrichtungen sind zwischen einer Abdichtungs-Stellung, bei welcher das Zugband entspannt und ohne Druckwirkung auf den Schaumstoffkörper ist, und einer Öffnungs-Stellung, bei welcher das Zugband gespannt ist und den Schaumstoffkörper von der ersten Seitenwand weg gegen eine dieser gegenüberliegende zweite Seitenwand des Gehäuses zusammendrückt und dadurch einen Teil des Öffnungsquerschnitts des Durchlasskanals freilegt, verstellbar. Da sich das Zugband über die gesamte axiale Länge des Schaumstoffkörpers erstreckt, können bei der Öffnungs-Stellung der Spannvorrichtungen Leitungen ohne Widerstand in den Durchlasskanal eingeführt werden. Dies kann die Verlegung insbesondere für leicht biegsame Leitungen wie Kabel oder Glasfasern enorm erleichtern. Die Verstellung zwischen der Abdichtungs- und der Öffnungs-Stellung kann grundsätzlich beliebig oft wiederholt werden, sodass auch eine nachträgliche Verlegung und Ergänzung weiterer Leitungen möglich und einfach ist.

Die Spannvorrichtungen können manuell verstellbar sein. Der Schaumstoffkörper kann zur Stabilisierung seiner Lage im Durchlasskanal an der zweiten Seitenwand des Kanals befestigt, beispielsweise angeklebt, sein. Dies ist jedoch nicht zwingend erforderlich. Das Zugband kann - muss jedoch nicht zwingend - sich über die gesamte Breite des Durchlasskanals und damit auch des Schaumstoffkörpers erstrecken, um diesen zum Freilegen eines Teils des Öffnungsquerschnitts über die gesamte Breite des Durchlasskanals gleichmäßig zusammenzudrücken.

Die zwei Spannvorrichtungen können gleichartig oder spiegelsymmetrisch identisch ausgebildet sein. Insbesondere kann die Vorrichtung ferner eine Koordinationseinrichtung aufweisen, welche die Spannvorrichtungen derart mechanisch miteinander verbindet, dass die Verstellung einer Spannvorrichtung zugleich eine entsprechende oder spiegelsymmetrisch identische Verstellung der zweiten Spannvorrichtung bewirkt. So kann die Vorrichtung von einer Stirnseite des Durchlasskanals aus bedient werden.

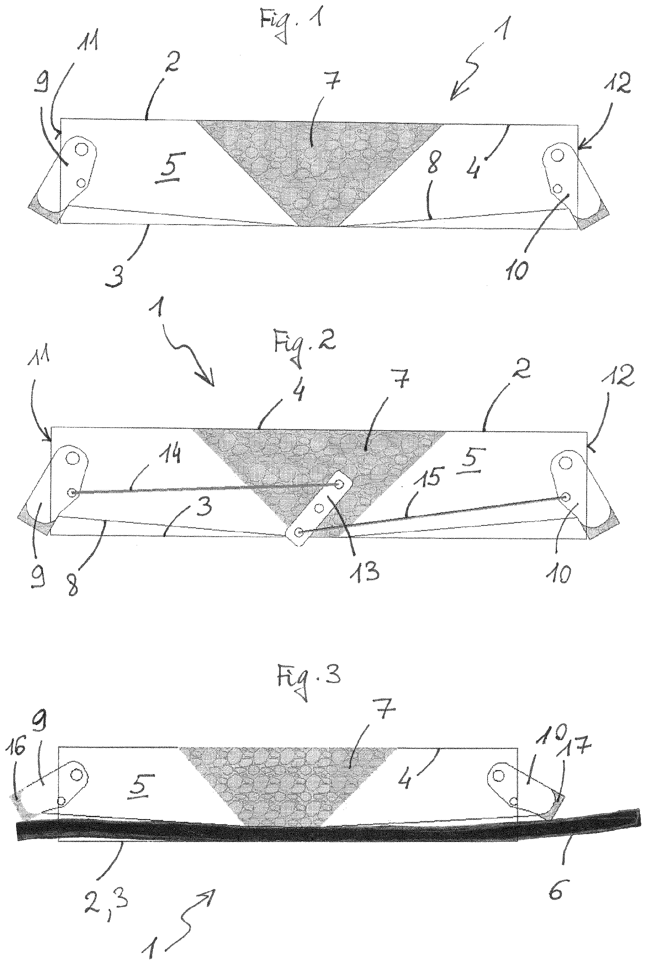

Gemäß einer Ausführungsform ist jede Spannvorrichtung als ein Drehhebel ausgebildet, der an je einer Stirnseite des Durchlasskanals befestigt ist. Jeder dieser Drehhebel ist um seine quer zum Durchlasskanal angeordnete Drehachse drehbar, um zwischen seiner Abdichtungs-Stellung und seiner Öffnungs-Stellung verstellt zu werden und das Zugband dadurch zu (ent-)spannen. Dabei kann jeder Drehhebel als eine Verschlussklappe ausgebildet sein, welche die jeweilige Stirnseite des Durchlasskanals in der Abdichtungs-Stellung des Drehhebels zumindest in einem an die erste Seitenwand grenzenten Teilbereich verschließt. Die jeweilige Verschlussklappe kann insbesondere eine Schaumstofflage aufweisen, die sie in der Abdichtungs-Stellung gegen die im Durchlasskanals geführte Leitung abdichtet. Hierzu kann die Schaumstofflage beispielsweise an einer entsprechenden Seitenkante der Verschlussklappe angeordnet sein (z. B. wie in Fig. 1-4).

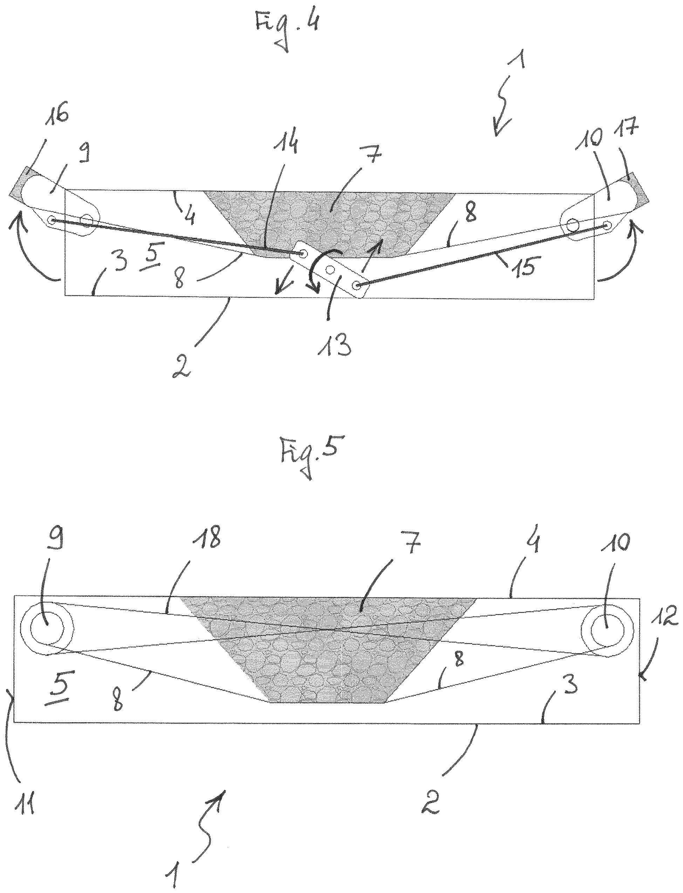

Bei dieser Ausführungsform kann die obige Koordinationseinrichtung eine im oder am Gehäuse axial zwischen den zwei Drehhebeln angeordnete Wippe sowie zwei Zug- und Schubstangen umfassen, die an zwei entgegengesetzten Enden der Wippe, die zu verschiedenen Seiten von deren Drehachse liegen, befestigt sind. Jede Zug- und Schubstange verbindet dabei die Wippe mit je einem Drehhebel zur Übertragung seiner Drehbewegung auf die Wippe und damit auch auf den jeweils anderen Drehhebel. Alternativ oder zusätzlich kann jeder Drehhebel im Hinblick auf die Lage seiner Drehachse und damit erreichbare Drehwinkel derart ausgebildet sein, dass das Zugband beim Übergang beider Drehhebel aus deren Öffnungs-Stellungen in deren Abdichtungs-Stellungen über den jeweiligen Drehpunkt des Drehhebels gespannt wird und die Drehhebel durch Vorspannung des Schaumstoffkörpers in deren Öffnungs-Stellungen arretiert sind (z. B. wie in Fig. 4).

Bei einer alternativen Ausführungsform ist jede Spannvorrichtung als ein drehbarer Wickelkern ausgebildet, an dem das jeweilige Zugbandende so befestig ist, dass sich das Zugband auf die Wickelkerne bei deren gegenläufiger Drehung beim Übergang aus der Öffnungs- in die Abdichtungs-Stellung wickelt und dadurch spannt. Dabei kann die obige Koordinationseinrichtung als ein Verbindungsband ausgebildet sein, das an jedem Wickelkern drehfest anliegt oder befestigt ist und beide Wickelkerne zu einer gegenläufigen Drehungsübertragung überkreuz verbindet, beispielsweise als eine einmal überkreuzte Schlaufe wie in Fig. 5.

Um das Zusammendrücken des Schaumstoffkörpers durch das Zugband zu erleichtern, kann der Schaumstoffkörper in seinem nicht komprimierten Zustand beispielsweise einen dreieckigen, trapezförmigen, rechteckigen oder anderen block-, keil- oder wellenförmigen Längsschnitt in axialer Richtung des Durchlasskanals besitzen, dessen längere Basisseite der zweiten Seitenwand des Durchlasskanals zugewandt ist. Alternativ oder zusätzlich kann sich der Schaumstoffkörper in axialer Richtung des Durchlasskanals nur über dessen vorbestimmte Teillänge erstrecken und dabei z. B. etwa mittig angeordnet sein. In den verbleibenden Längenabschnitten des Durchlasskanals kann beispielsweise an den Seitenwänden ergänzend feuerhemmendes und/oder intumeszierendes Material vorgesehen sein, welches bei Hitzeeinwirkung aufschäumt und den Kanal im Brandfall zusätzlich verschließt und abdichtet. Alternativ oder zusätzlich hierzu kann der Schaumstoffkörper mit einem feuerhemmenden und/oder intumeszierenden Material ausgeführt sein.

Insbesondere können die Spannvorrichtungen dazu ausgebildet sein, aus der Öffnungs-Stellung durch eine Rückstellkraftwirkung des komprimierten Schaumstoffs und/oder des gespannten Zugbands selbsttätig in die Abdichtungs-Stellung zurückkehren, sodass ein manuelles Schließen entfällt. Um eine ruckartige Wiederschließung zu vermeiden, können die Spannvorrichtungen insbesondere einen mechanischen Dämpfungs- oder Bremsmechanismus ("slow close - Mechanismus") zur Verlangsamung dieser Rückkehr aufweisen, insbesondere bei der Ausführungsform mit einem auf die Wickelkerne aufgewickelten Zugband. Hierzu kann beispielsweise das Funktionsprinzip der Ankerhemmung aus dem Uhrenbereich genutzt werden: Ein Wickelkern muss hierzu lediglich mit einem Hemmungsrad und einem Anker mit Pendel oder Unruhe ausgestattest sein. Dieser Mechanismus kann flach im Seitenbereich des Gehäuses ausgebildet sein. Dadurch ist es möglich, dass nach Aufrollen des Zugbandes sich der Kanal in beispielsweise wenigen Minuten (z. B. 5 Minuten) wieder selbst verschließt. Ein anders Prinzip des langsamen Schließens wäre das Prinzip über einen Governor: Hier erfolgt die Hemmung über eine große Übersetzung, wobei die eigentliche Hemmung über den Luftwiderstand erfolgt. Bei der Ausführungsform mit den Drehhebeln ist auch ein sehr langsam schließender Gasdruckdämpfer möglich. Andere Dämpfungs- und Bremsmechanismen sind ebenfalls denkbar.

Die obigen Ausführungsformen und spezifische Ausgestaltungen der Erfindung werden nachfolgend anhand der in den Zeichnungen dargestellten Beispiele näher erläutert. Die Zeichnungen sind schematisch. Sie können, müssen jedoch nicht als maßstabsgetreu zu verstehen sein. Es zeigen, jeweils im axialen Längsschnitt:
- Figur 1: ein Ausführungsbeispiel der Vorrichtung der hierin dargelegten Art;
- Figur 2: eine Weiterbildung der Vorrichtung der Fig. 1;
- Figur 3: Vorrichtung der Fig. 1 mit darin durchgeführter Leitung;
- Figur 4: Vorrichtung der Fig. 2 in geöffnetem Zustand; und
- Figur 5: ein weiteres Ausführungsbeispiel der Vorrichtung der hierin dargelegten Art in geöffnetem Zustand.

Fig. 1 zeigt in einem axialen Längsschnitt ein Ausführungsbeispiel einer Vorrichtung 1 zur Abdichtung einer Leitungsdurchführung. Die Vorrichtung 1 umfasst ein hülsenartiges Gehäuse 2 mit vier flachen Seitenwänden, von denen in Fig. 1 nur eine erste Seitenwand 3 und eine dieser gegenüberliegende zweite Seitenwand 4 zu sehen sind. Dadurch ist ein axialer Durchlasskanal 5 zum Durchführen von Leitungen 6 (vgl. Fig. 3), in diesem Beispiel Kabeln, begrenzt.

Im Durchlasskanal 5 ist in diesem Beispiel mittig ein elastisch komprimierbarer Schaumstoffkörper 7 angeordnet, dessen Längsschnitt hier eine Dreiecksform besitzt, aber auch als Welle, Doppelwelle oder als einfacher Block ausgeführt sein kann. Der Schaumstoffkörper 7 ist bereits durch die Seitenwände 3 und 4 vorkomprimiert und verschließt dabei einen Öffnungsquerschnitt des Durchlasskanals 5 vollständig. Durch diese hohe Vorspannung des vorzugsweise keilförmigen Schaumstoffkörpers 7 kann bereist eine gute Rauchgasdichtigkeit erreicht werden. Der Schaumstoffkörper 7 kann bei einer alternativen Ausführung auch einen rechteckigen Querschnitt, einen Querschnitt mit wenigstens einem bogenförmigen Bereich oder einen halbkreisförmigen Querschnitt oder dergleichen aufweisen. Der Schaumstoffkörper 7 kann vollständig oder teilweise mit einem feuerhemmenden Material, wie beispielsweise EPDM, ausgeführt sein. Alternativ oder zusätzlich kann der Schaumstoffkörper 7 vollständig oder teilweise mit einem intumeszierenden Material ausgeführt sein.

Ein elastisches Zugband 8 ist mit seinen Enden an zwei Spannvorrichtungen 9 und 10 fest fixiert, die je an einer Stirnseite 11 bzw. 12 des Gehäuses 2 angebracht und als Drehhebel und zugleich als Verschlussklappen ausgebildet sind. Das Zugband 8 verläuft im Durchlasskanal 5 zwischen dem Schaumstoffkörper 7 und der ersten Seitenwand 3. In Fig. 1 sind die Verschlussklappen etwa in einer Abdichtungs-Stellung, bei der das Zugband 8 entspannt und ohne Druckwirkung auf den Schaumstoffkörper 7 ist. Das Zugband 8 kann bei einer alternativen Ausführung der Erfindung bei entsprechender konstruktiver Auslegung auch mit einem nicht dehnbaren Material ausgeführt sein.

Fig. 2 zeigt eine Weiterbildung der Vorrichtung 1 der Fig. 1, die zusätzlich eine Koordinationseinrichtung in Form einer Wippe 13 (oder Umlenkhebel) mit zwei Zug- und Schubstangen 14 und 15 zur Übertragung der Drehbewegung von einem Drehhebel auf den anderen über die Wippe 13 aufweist.

Fig. 3 zeigt die Vorrichtung der Fig. 1 mit einer im Durchlasskanal 5 durchgeführten Leitung 6, wobei jede Verschlussklappe an deren unterer Kante eine Schaumstofflage 16 bzw. 17 aufweist, die die Leitung 6 in der Abdichtungs-Stellung der Verschlussklappen zusätzlich abdichten kann. Hierbei kann es vorgesehen sein, dass durch eine entsprechende Ausführung und Anordnung des Zugbandes und des Schaumstoffkörpers 7 eine Schließbewegung der Verschlussklappen verursacht und somit ein sicheres Verschließen und Abdichten der Vorrichtung 1 erzielt wird.

Fig. 4 zeigt die Vorrichtung 1 der Fig. 2 in geöffneter Form: Durch ein einseitiges Öffnen einer Verschlussklappe wird die Kraft über die Schub- und Zugstangen 14 und 15 und die Wippe 13 auf die zweite Verschlussklappe übertragen, wie durch Pfeile angedeutet. Das Zugband 8 wird dadurch gespannt. Dadurch wird der darüber liegende Schaumstoffkörper 7 komprimiert, d. h. von der ersten Seitenwand 3 weg gegen die zweite Seitenwand 4 zusammendrückt, sodass ein Teil des Öffnungsquerschnitts des Durchlasskanals 5 freigelegt wird. Bei optimaler Auslegung wird das Zugband 8 unter dem Drehpunkt der Verschlussklappen hindurchgeführt, sodass die Spannung in der dargestellten Endposition (Öffnungs-Stellung) etwas geringer ist (Totpunkt überschritten), und sich die Vorrichtung 1 durch die Vorspannung des Schaumstoffkörpers 7 selbst im geöffneten Zustand arretiert. Somit können sehr einfach Kabel/Leitungen 6 durch den Durchlasskanal 5 geführt werden.

Fig. 5 zeigt ein alternatives Ausführungsbeispiel der Vorrichtung 1, das sich von demjenigen der Fig. 4 nur in der Ausführung der Spannvorrichtungen 9 und 10 unterscheidet. In Fig. 5 wird das Zugband 8 nicht über Drehhebel und Schub- und Zugstangen, sondern durch das Aufwickeln auf zwei Wickelkerne gespannt. Sind die beiden Wickelkerne zudem wie gezeigt mit einem Verbindungsband 18 überkreuz verbunden, dann kann der Schaumstoffkörper 7 von beiden Seiten einseitig nach oben zusammengedrückt/bewegt werden, um den Durchlasskanal 5 zum Durchführen einer Leitung freizulegen.

## Patentansprüche

1. Vorrichtung (1) zur Abdichtung einer Leitungsdurchführung, umfassend:
- ein hülsenartiges Gehäuse (2) mit vier flachen Seitenwänden, die einen axialen Durchlasskanal (5) zum Durchführen von Leitungen (6) begrenzen;
- einen im Durchlasskanal (5) angeordneten komprimierbaren Schaumstoffkörper (7), welcher in seinem allein durch die Seitenwände vorkomprimierten Zustand einen Öffnungsquerschnitt des Durchlasskanals (5) vollständig verschließt und zumindest gegen Rauch abdichtet;
- zwei Spannvorrichtungen (9, 10), die axial zu beiden Seiten des Schaumstoffkörpers (7) im Durchlasskanal oder an den Stirnseiten (11, 12) des Durchlasskanals (5) befestigt sind und zum Spannen eines elastischen Zugbands (8) ausgebildet sind, welches mit seinen Enden an je einer der Spannvorrichtungen (9, 10) befestigt ist und im Durchlasskanal (5) zwischen dem Schaumstoffkörper (7) und einer ersten Seitenwand (3) verläuft;
- wobei die Spannvorrichtungen (9, 10) zwischen einer Abdichtungs-Stellung, bei welcher das Zugband (8) entspannt und ohne Druckwirkung auf den Schaumstoffkörper (7) ist, und einer Öffnungs-Stellung, bei welcher das Zugband (8) gespannt ist und den Schaumstoffkörper (7) von der ersten Seitenwand (3) weg gegen eine gegenüberliegende zweite Seitenwand (4) zusammendrückt und dadurch einen Teil des Öffnungsquerschnitts freilegt, verstellbar sind.

2. Vorrichtung (1) nach Anspruch 1, ferner umfassend
- eine Koordinationseinrichtung, welche die zwei Spannvorrichtungen (9, 10) derart mechanisch miteinander verbindet, dass die Verstellung einer der zwei Spannvorrichtungen zugleich eine im Wesentlichen gleiche Verstellung der zweiten Spannvorrichtung bewirkt.

3. Vorrichtung (1) nach Anspruch 1 oder 2, wobei
- jede Spannvorrichtung (9, 10) als ein Drehhebel ausgebildet ist, der an je einer Stirnseite (11, 12) des Durchlasskanals (5) befestigt ist;
- wobei jeder dieser Drehhebel um seine quer zum Durchlasskanal (5) angeordnete Drehachse drehbar ist, um zwischen seiner Abdichtungs-Stellung und seiner Öffnungs-Stellung verstellt zu werden.

4. Vorrichtung (1) nach Anspruch 3, wobei
- jeder Drehhebel als eine Verschlussklappe ausgebildet ist, welche die jeweilige Stirnseite (11, 12) des Durchlasskanals (5) in der Abdichtungs-Stellung zumindest in einem an die erste Seitenwand (3) grenzenten Teilbereich verschließt; und
- die jeweilige Verschlussklappe vorzugsweise eine Schaumstofflage (16, 17) aufweist, die die Verschlussklappe in der Abdichtungs-Stellung gegen die erste Seitenwand (3) des Durchlasskanals (5) und/oder die durch ihn geführte Leitung (6) abdichtet.

5. Vorrichtung (1) nach Anspruch 2 in Verbindung mit Anspruch 3 oder 4, wobei
- die Koordinationseinrichtung eine im oder am Gehäuse (2) axial zwischen den zwei Drehhebeln angeordnete Wippe (13) sowie zwei Zug- und Schubstangen (14, 15) umfasst;
- die Zug- und Schubstangen (14,15) an zwei entgegengesetzten Enden der Wippe (13), die zu verschiedenen Seiten von deren Drehachse liegen, befestigt sind; und
- jede Zug- und Schubstange (14, 15) die Wippe (13) mit je einem Drehhebel zur Übertragung seiner Drehbewegung auf die Wippe (13) verbindet.

6. Vorrichtung (1) nach einem der Ansprüche 3 bis 5, wobei
- jeder Drehhebel im Hinblick auf die Lage seiner Drehachse und damit erreichbare Drehwinkel derart ausgebildet ist, dass das Zugband (8) beim Übergang beider Drehhebel aus deren Öffnungs-Stellungen in deren Abdichtungs-Stellungen über den jeweiligen Drehpunkt des Drehhebels gespannt wird und die Drehhebel durch eine Vorspannung des Schaumstoffkörpers (7) in deren Öffnungs-Stellungen arretiert sind.

7. Vorrichtung (1) nach Anspruch 1 oder 2, wobei
- jede Spannvorrichtung (9, 10) als ein drehbarer Wickelkern ausgebildet ist, an dem das jeweilige Zugbandende so befestig ist, dass sich das Zugband (8) auf die Wickelkerne bei deren gegenläufiger Drehung beim Übergang aus der Öffnungs- in die Abdichtungs-Stellung wickelt und dadurch spannt.

8. Vorrichtung (1) nach Anspruch 7 in Verbindung mit Anspruch 2, wobei
- die Koordinationseinrichtung als ein Verbindungsband (18) ausgebildet ist, das an jedem Wickelkern drehfest anliegt oder befestigt ist und beide Wickelkerne zu einer gegenläufigen Drehungsübertragung überkreuz verbindet.

9. Vorrichtung (1) nach einem der vorhergehenden Ansprüche, wobei
- der Schaumstoffkörper (7) in seinem nicht komprimierten Zustand einen dreieckigen, trapezförmigen, rechteckigen oder anderen block-, keil- oder wellenförmigen Längsschnitt in axialer Richtung des Durchlasskanals (5) besitzt, wobei eine längere Basisseite dieses Längsschnitts der zweiten Seitenwand (4) des Durchlasskanals (5) zugewandt ist; und/oder
- der Schaumstoffkörper (7) sich in axialer Richtung des Durchlasskanals (5) nur über dessen vorbestimmte Teillänge erstreckt und dabei vorzugsweise etwa mittig angeordnet ist.

10. Vorrichtung (1) nach einem der vorhergehenden Ansprüche, wobei
- die Spannvorrichtungen (9, 10) dazu ausgebildet sind, aus der Öffnungs-Stellung durch eine Rückstellkraftwirkung des komprimierten Schaumstoffkörpers (7) und/oder des gespannten Zugbands (8) selbsttätig in die Abdichtungs-Stellung zurückkehren; und
- vorzugsweise einen mechanischen Dämpfungs- oder Bremsmechanismus zur Verlangsamung dieser Rückkehr aufweisen.

## Claims

1. Device (1) for sealing a conduit passage, comprising:
- a sleeve-like housing (2) having four flat side walls which delimit an axial passage channel (5) for the passage of conduits (6);
- a compressible foam body (7) arranged in the passage channel (5), which foam body, when precompressed solely by the side walls, completely closes an opening cross-section of the passage channel (5) and is sealed at least against smoke;
- two tensioning devices (9, 10) which are fastened in the passage channel or at the end faces (11, 12) of the passage channel (5) axially with respect to both sides of the foam body (7) and are designed for tensioning a resilient tension band (8) which is fastened by its ends in each case to one of the tensioning devices (9, 10) and runs in the passage channel (5) between the foam body (7) and a first side wall (3);
- wherein the tensioning devices (9, 10) are adjustable between a sealing position, in which the tension band (8) is relaxed and has no pressure effect on the foam body (7), and an opening position, in which the tension band (8) is tensioned and presses the foam body (7) away from the first side wall (3) toward an opposite second side wall (4) and thereby exposes a portion of the opening cross-section.

2. Device (1) according to claim 1, further comprising:
- a coordination means which mechanically connects the two tensioning devices (9, 10) to one another in such a way that the adjustment of one of the two tensioning devices simultaneously causes substantially the same adjustment of the second tensioning device.

3. Device (1) according to either claim 1 or claim 2, wherein
- each tensioning device (9, 10) is designed as a rotary lever which is fastened in each case to one end face (11, 12) of the passage channel (5);
- wherein each of these rotary levers is rotatable about its axis of rotation arranged perpendicularly to the passage channel (5) in order to be adjusted between its sealing position and its opening position.

4. Device (1) according to claim 3, wherein
- each rotary lever is designed as a closure flap which closes the corresponding end face (11, 12) of the passage channel (5) in the sealing position at least in a partial region which is adjacent to the first side wall (3); and
- the corresponding closure flap preferably has a foam layer (16, 17) which seals the closure flap in the sealing position against the first side wall (3) of the passage channel (5) and/or the conduit (6) guided therethrough.

5. Device (1) according to claim 2 in combination with either claim 3 or claim 4, wherein
- the coordination means comprises a rocker (13) arranged axially in or on the housing (2) between the two rotary levers, and two pull and push rods (14, 15);
- the pull and push rods (14,15) are fastened at two opposite ends of the rocker (13) which are located on different sides of the axis of rotation of said rocker; and
- each pull and push rod (14, 15) connects the rocker (13) to a rotary lever for transmitting its rotational movement to the rocker (13).

6. Device (1) according to any of claims 3 to 5, wherein
- each rotary lever is designed with regard to the position of its axis of rotation and thus achievable angles of rotation such that the tension band (8) is tensioned over the corresponding pivot point of the rotary lever during the transition of both rotary levers from their opening positions into their sealing positions and the rotary levers are locked in their opening positions by pre-tensioning the foam body (7).

7. Device (1) according to either claim 1 or claim 2, wherein
- each tensioning device (9,10) is designed as a rotatable winding core on which the corresponding tension band end is fastened such that the tension band (8) is wound onto the winding cores during their counter-rotary rotation during the transition from the opening position into the sealing position and thereby tensions.

8. System (1) according to claim 7 in combination with claim 2, wherein
- the coordination means is designed as a connecting band (18), which is rotationally fixed or fastened to each winding core and connects both winding cores crosswise for a counter-rotary transmission of rotation.

9. Device (1) according to any of the preceding claims, wherein
- the foam body (7) has, in its non-compressed state, a triangular, trapezoidal, rectangular or other block-shaped, wedge-shaped or wave-shaped longitudinal section in the axial direction of the passage channel (5), wherein a longer base side faces this longitudinal section of the second side wall (4) of the passage channel (5); and/or
- the foam body (7) extends in the axial direction of the passage channel (5) only over its predetermined partial length and is preferably arranged approximately centrally.

10. Device (1) according to any of the preceding claims, wherein
- the tensioning devices (9, 10) are designed to automatically return to the sealing position from the opening position by a restoring force effect of the compressed foam body (7) and/or of the tensioned tension band (8); and
- preferably have a mechanical damping or braking mechanism for slowing down this return.

## Revendications

1. Dispositif (1) pour l'étanchéification d'un passage de conduite, comprenant :
- un boîtier en forme de douille (2), comportant quatre parois latérales plates qui délimitent un canal de passage axial (5) pour le passage de conduites (6) ;
- un corps en mousse compressible (7) disposé dans le canal de passage (5), lequel corps en mousse, dans son état pré-comprimé uniquement par les parois latérales, obture complètement une section d'ouverture du canal de passage (5) et forme une étanchéité au moins à la fumée ;
- deux dispositifs de serrage (9, 10) qui sont fixés axialement des deux côtés du corps en mousse (7) dans le canal de passage ou sur les côtés frontaux (11, 12) du canal de passage (5), et sont conçus pour le serrage d'une bande de traction élastique (8), laquelle est fixée avec ses extrémités à chacun des dispositifs de serrage (9, 10) et traverse le canal de passage (5) entre le corps en mousse (7) et une première paroi latérale (3) ;
- dans lequel les dispositifs de serrage (9, 10) peuvent être déplacés entre une position d'étanchéification, dans laquelle la bande de traction (8) est desserrée et n'a aucun effet de pression sur le corps en mousse (7), et une position d'ouverture, dans laquelle la bande de traction (8) est serrée et comprime le corps en mousse (7), en l'éloignant de la première paroi latérale (3), contre une seconde paroi latérale (4) opposée, et expose ainsi une partie de la section d'ouverture.

2. Dispositif (1) selon la revendication 1, comprenant en outre
- un moyen de coordination qui relie les deux dispositifs de serrage (9, 10) mécaniquement entre eux de sorte que le déplacement de l'un des deux dispositifs de serrage entraîne simultanément un déplacement sensiblement identique du second dispositif de serrage.

3. Dispositif (1) selon la revendication 1 ou 2, dans lequel
- chaque dispositif de serrage (9, 10) est conçu comme un levier rotatif qui est fixé à chaque côté frontal (11, 12) du canal de passage (5) ;
- dans lequel chaque levier rotatif peut être mis en rotation autour de son axe de rotation disposé transversalement au canal de passage (5), pour être déplacé entre sa position d'étanchéification et sa position d'ouverture.

4. Dispositif (1) selon la revendication 3, dans lequel
- chaque levier rotatif est conçu comme un clapet de fermeture qui obture le côté frontal respectif (11, 12) du canal de passage (5) dans la position d'étanchéification, au moins dans une zone partielle attenante à la première paroi latérale (3) ; et
- le clapet de fermeture respectif présente de préférence une couche de mousse (16, 17) qui rend le clapet de fermeture dans la position d'étanchéification étanche par rapport à la première paroi latérale (3) du canal de passage (5) et/ou par rapport à la conduite (6) guidée dans celui-ci.

5. Dispositif (1) selon la revendication 2 en combinaison avec la revendication 3 ou 4, dans lequel
- le moyen de coordination comprend une bascule (13) disposée dans le boîtier (2) ou sur celui-ci, axialement entre les deux leviers rotatifs, ainsi que deux tiges de traction et de poussée (14, 15) ;
- les tiges de traction et de poussée (14, 15) sont fixées à deux extrémités opposées de la bascule (13), lesquelles extrémités se trouvent sur des côtés différents de leur axe de rotation ; et
- chaque tige de traction et de poussée (14, 15) relie la bascule (13) à chaque levier rotatif pour la transmission de son mouvement rotatif à la bascule (13).

6. Dispositif (1) selon l'une des revendications 3 à 5, dans lequel
- par rapport à la position de son axe de rotation et à l'angle de rotation qui peut être obtenu, chaque levier rotatif est conçu de telle sorte que la bande de traction (8) est serrée par l'intermédiaire du point de rotation respectif du levier rotatif lorsque les deux leviers rotatifs passent de leurs positions d'ouverture à leurs positions d'étanchéification, et les leviers rotatifs sont bloqués dans leurs positions d'ouverture par une précontrainte du corps en mousse (7).

7. Dispositif (1) selon la revendication 1 ou 2, dans lequel
- chaque dispositif de serrage (9, 10) est conçu comme un noyau d'enroulement rotatif auquel l'extrémité de la bande de traction respective est fixée de sorte que la bande de traction (8) s'enroule sur les noyaux d'enroulement lors de leur rotation en sens inverse pendant le passage de la position d'ouverture à la position d'étanchéification, et serre ainsi.

8. Dispositif (1) selon la revendication 7 en combinaison avec la revendication 2, dans lequel
- le moyen de coordination est conçu comme une bande de liaison (18) qui repose de manière solidaire en rotation sur chaque noyau d'enroulement ou est fixée à celui-ci, et relie de manière croisée les deux noyaux d'enroulement pour une transmission par rotation en sens inverse.

9. Dispositif (1) selon l'une des revendications précédentes, dans lequel
- le corps en mousse (7), dans son état non comprimé, a une section longitudinale triangulaire, trapézoïdale, rectangulaire ou autrement en forme de bloc, cunéiforme ou ondulée dans la direction axiale du canal de passage (5), dans lequel une base plus longue de cette section longitudinale est orientée vers la seconde paroi latérale (4) du canal de passage (5) ; et/ou
- le corps en mousse (7) s'étend dans la direction axiale du canal de passage (5), uniquement sur les longueurs partielles prédéterminées de celui-ci, et est ainsi disposé de préférence approximativement au milieu.

10. Dispositif (1) selon l'une des revendications précédentes, dans lequel
- les dispositifs de serrage (9, 10) sont conçus pour retourner automatiquement, partant de la position d'ouverture et sous l'action d'une force de rappel du corps en mousse (7) comprimé et/ou de la bande de traction (8) serrée, dans la position d'étanchéification ; et
- présentent de préférence un mécanisme mécanique d'amortissement ou de freinage pour le ralentissement de ce retour.
